# EUROPÄISCHE PATENTSCHRIFT

(11) **EP 0 741 653 B1**
(45) Veröffentlichungstag und Bekanntmachung des Hinweises auf die Patenterteilung: **06.05.1998**
(21) Anmeldenummer: 95907610.0
(22) Anmeldetag: 25.01.1995
(51) Int. Cl.: B60T 8/36

(54) **DRUCKREGELVORRICHTUNG FÜR SCHLUPFGEREGELTE HYDRAULISCHE BREMSANLAGEN**
PRESSURE CONTROL DEVICE FOR HYDRAULIC BRAKING SYSTEMS WITH ANTI-SLIP CONTROL
REGULATEUR DE PRESSION POUR SYSTEMES DE FREINAGE HYDRAULIQUES A REGULATION ANTIPATINAGE

(30) Priorität: 04.02.1994 DE 4403466
(43) Veröffentlichungstag der Anmeldung: 13.11.1996
(73) Patentinhaber: ITT Automotive Europe GmbH, 60488 Frankfurt (DE)
(72) Erfinder: HINZ, Axel, D-61267 Neu-Anspach (DE); CZARNETZKI, Edwin, D-65604 Elz (DE)
(86) Internationale Anmeldenummer: EP9500267
(87) Internationale Veröffentlichungsnummer: WO9521082

(56) Entgegenhaltungen:
- EP-A- 0 366 966
- EP-A- 0 456 991
- EP-B- 0 356 817
- WO-A-89/01434
- WO-A-93/02901

## Beschreibung

Die Erfindung betrifft eine Druckregelvorrichtung einer schlupfgeregelten hydraulischen Bremsanlage nach dem Oberbegriff des Anspruches 1.

Aus der EP 0 356 817 B1 ist bereits eine Druckregelvorrichtung einer schlupfgeregelten, hydraulischen Bremsanlage hervorgegangen. In einer ersten Ausführungsform ist das Pumpenaggregat vereinigt mit dem Druckmodulator, an den beiden Zugankern des pneumatischen Kraftverstärkers befestigt, wozu der Druckmodulator an einer Stirnseite mit einem Halteauge versehen ist, um den ersten Zuganker in Verbindung mit Dämpfungselementen im Halteauge zu befestigen. Der zweite Zuganker durchgreift gleichfalls ein Halteauge eines flachstahlähnlichen Halteteils, welches am Deckel des Elektromotors befestigt ist. In einer weiteren Ausführungsform ist das an der Stirnfläche des Elektromotorengehäuses befestigte flachstahlähnliche Halteteil abweichend zur ersten Ausführungsform nicht am Zuganker befestigt, sondern an einer Halteschraube des Hauptzylinders. In einer dritten Ausführungsform ist als Mehrpunktaufhängung am Hydraulikaggregat eine aus zwei Haltebolzen und einem Flansch gebildete Haltevorrichtung vorgesehen, die zwischen dem Hauptzylinder und dem pneumatischen Kraftverstärker an den beiden Zugankern befestigt ist. Mittels einer das Elektromotorengehäuse umgreifenden Schelle und einem am Stirnflächenbereich des Druckmodulators angeformten Halteauge wird das Hydraulikaggregat innerhalb des in der Aufhängung angeordneten Dämpferelementen an der Haltevorrichtung angeschraubt.

Die vorbeschriebenen Aufhängungen des Hydraulikaggregats am Kraftverstärker bzw. am Hauptzylinder haben jedoch alle einen erhöhten Herstellungsaufwand zur Folge, da unter anderem das Hydraulikaggregat mit entsprechend aufwendig herzustellenden Halteaugen zu versehen ist und die separate Halterung an der Stirnfläche des Elektromotors einerseits ein besonders steif dimensioniertes Motorengehäuse benötigt, andererseits Verspannungen bei der Montage des Hydraulikaggregates am Kraftverstärker bzw. am Hauptzylinder nicht auszuschließen sind. Das Baulvolumen und zwangsläufig damit auch das Gewicht nehmen in nicht unerheblichem Maße zu.

Die gattungsbildende EP-A-0456991 beschreibt eine Druckregelvorrichtung für schlupfgeregelte hydraulische Bremsanlagen, deren Hydraulikeinheit eine Konsole aufweist, die an der Fahrzeugkarosserie befestigt ist. Hierzu weist die Hydraulikeinheit drei Gummilager auf, in die mit dem Gehäuse der Hydraulikeinheit fest verbundene Lagerzapfen eingreifen. Die Lagerzapfen sind auf mehrere Flächen der Hydraulikeinheit verteilt, so daß die Hydraulikeinheit im wesentlichen durch eine U-förmig gebogene Konsole zu beiden Seiten umgriffen ist.

Daher ist es die Aufgabe der Erfindung, eine Druckregelvorrichtung einer schlupfgeregelten, hydraulischen Bremsanlage zu schaffen, die eine einfache, kostengünstige Befestigung des Hydraulikaggregates zuläßt, die eine Standardisierung der Aufhängungspunkte für alle Gehäusevarianten des Hydraulikaggregates zuläßt und die eine einfache, optimale Schwingungsisolation zwischen dem Hydraulikaggregat und der Haltevorrichtung gewährleistet, wobei das Elektromotorgehäuse keine Haltekräfte aufnehmen muß.

Diese Aufgaben werden erfindungsgemäß durch die kennzeichnenden Merkmale des Patentanspruches 1 gelöst.

Damit ist gewährleistet, daß die benötigten Einzelteile auf ein Minimum begrenzt sind und eine Standardisierung zur Vereinheitlichung der Haltepunkte erreicht ist. Das Gehäuse des Elektromotors kann entsprechend kurz und dünnwandig konstruiert werden. Eine Standardisierung der Rohrleitungsanschlüsse bei identischer Haltevorrichtung ist gegeben.

Aus den nachfolgend beschriebenen konstruktiven Ausführungsformen der Erfindung, gehen die weiteren Merkmale mit ihren Vorteilen hervor.

Es zeigen:
- Fig. 1: eine prinzipielle Ausführungsform zur Gestaltung einer Mehrpunktaufhängung an einem Hydraulikaggregat,
- Fig. 2: eine räumliche Darstellung einer Druckregelvorrichtung mit einer konkreten Ausführungsform zur Aufhängung des Hydraulikaggregates am Bremsdruckgeber,
- Fig.3: eine für die Befestigung des Hydraulikaggregates am Bremsdruckgeber nach Fig. 2 verwendbare Haltevorrichtung,
- Fig. 4: eine Ausführungsform zur Befestigung der nach Fig. 1 bis Fig. 3 verwendeten Dämpferelemente.

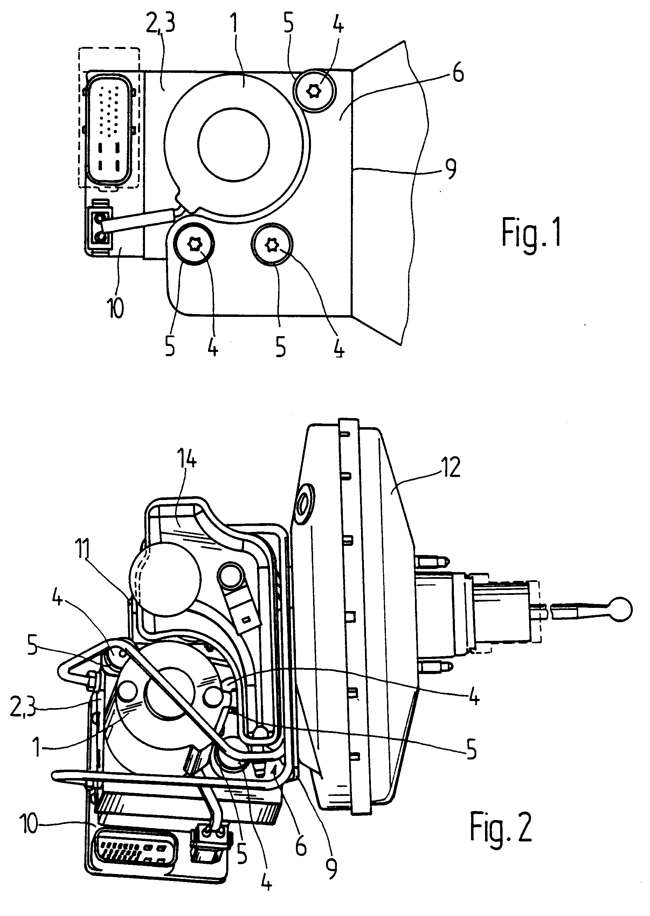

Die Fig. 1 zeigt in vereinfachter Darstellung eine Draufsicht auf das aus einem Elektromotor 1, einer Hilfsdruckpumpe 2 und einem Druckmodulator 3 gebildete Hydraulikaggregat, an dessen eine Stirnfläche der Elektromotor 1 angebracht ist. Diese Stirnfläche bildet die Flanschfläche zur Aufnahme der Mehrpunktaufhängung 4, die im gezeigten Ausführungsbeispiel durch drei um den Gehäuseumfang des Elektromotors 1 verteilte Halteschrauben dargestellt ist. Die Halteschrauben bilden eine Dreipunktaufhängung für die im wesentlichen plattenförmig gestaltete Haltevorrichtung 6, die das Gehäuse des Elektromotors 1 nur teilweise zu umgreifen braucht. Zwischen den als Dreipunktaufhängung wirksamen Halteschrauben und der Haltevorrichtung 6 sind Dämpferelemente 5 angebracht, auf die explizit in Fig. 5 eingegangen wird.

Die Haltevorrichtung 6 weist zur entsprechenden Anpassung an die Peripherie eine Abkröpfung 9 auf, die bei entsprechender Gestaltung bzw. unterstützt durch entsprechende Formgebung, wie beispielsweise Sicken zur Steifigkeitserhöhung und damit zur Schwingungsisolation beitragen kann. Auf der dem umgriffenen Haltebereich abgewandten Seitenfläche des Hydraulikaggregates verbleibt entsprechend Raum zur Anordnung einer für die Steuerung der im Druckmodulator 3 befindlichen Hydraulikventile notwendigen Steuer- und Regelelektronik 10. Wie in der Abbildung angedeutet ist, sind die Hilfsdruckpumpe 2 und die Hydraulikventile des Druckmodulators 3 in einem blockförmigen Gehäuse integriert, so daß sich eine besonders kompakte Bauart ergibt, die durch den vorgeschlagenen Erfindungsgedanken zur Anordnung eines einzigen, zentral an der Elektromotorenflanschseite angebrachten Mehrpunktaufhängung 4 weiterhin zur Miniaturisierung der Gesamtanlage beiträgt. Die Mehrpunktaufhängung 4 ist folglich durch ein standardisiertes Bohrlochmuster an der freien Flanschfläche des Hydraulikaggregates möglich, wobei die Verbohrung des blockförmigen Gehäuses, in Verbindung mit der Aufnahmebohrung für den Elektromotor 1, in einem einzigen Arbeitsgang kostengünstig hergestellt werden kann. Die Aufhängung und die Halterung des Hydraulikaggregates reduziert sich nunmehr auf die Anordnung von drei Dämpferelementen 5 in der Haltevorrichtung 6 und auf das Einfügen der Halteschrauben in einer Montageebene zur Befestigung des Hydraulikaggregates an der Haltevorrichtung 6.

Eine Gesamtdarstellung einer Druckregelvorrichtung mit einer weitgehend rechtwinklig abgekröpften Haltevorrichtung 6 geht aus Fig. 2 hervor. Zu erkennen ist hierin gleichfalls die als Dreipunktaufhängung ausgeführte Mehrpunktaufhängung am Hydraulikaggregat, das seitlich zum Hauptzylinder 11 und zum pneumatischen Kraftverstärker 12 mittels der Haltevorrichtung 6 befestigt ist. Die Haltevorrichtung 6 bildet eine am Hydraulikaggregat 2,3 vormontierte Einheit, die vor dem Zusammenfügen des Hauptzylinders 11 mit dem Kraftverstärker 12 zwischen den beiden Baugruppen des Bremsdruckgebers eingespannt wird. Die Haltevorrichtung 6 ist vorzugsweise aus einem Dünnblechteil gestanzt, das durch relativ einfache Formgebung eine besonders steife, leichte und kleinbauende Zuordnung dicht an den Hauptzylinder 11 ermöglicht. Der in der Draufsicht gezeigte Nachlaufbehälter 14 des Hauptzylinders weist eine entsprechende an das Elektromotorengehäuse angepaßte Formgebung auf, die die Anordnung des Hydraulikaggregates begünstigt.

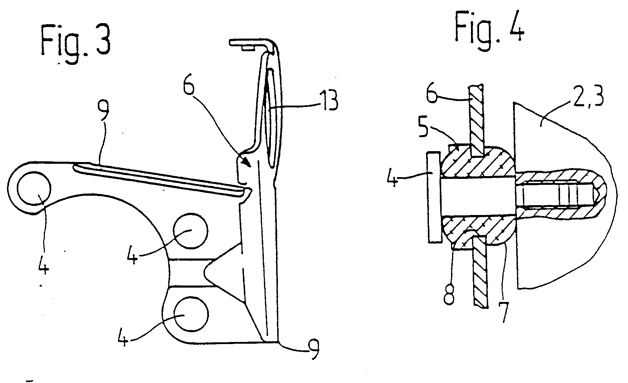

Die Fig. 3 zeigt die für die Druckregelvorrichtung nach Fig. 2 geeignete Haltevorrichtung 6 in räumlicher Darstellung. Gut zu erkennen sind die drei Halteaugen zur Aufnahme der Dämpferelemente 5 sowie die spezielle Formgebung durch Abkröpfen und Sicken des Dünnblechteils zu einem steifen leicht und kleinbauenden Haltekörper. Der Abschnitt der Haltevorrichtung 6, der zwischen dem Hauptzylinder 11 und dem Kraftverstärker 12 eingespannt wird, weist zur Hindurchführung der Druckstange sowie zur Abdichtung des pneumatischen Kraftverstärkers 12 gegenüber der Atmosphäre eine entsprechend groß dimensionierte Durchgangsöffnung 13 auf, die eine in der Abbildung nicht gezeigte Dichtung aufnimmt. Das Einbringen des Halteblechs zwischen Tandemhauptzylinder und Kraftverstärker 12 benötigt keine zusätzlichen Befestigungselemente. Das Dickenmaß der Dichtung ist hierbei so gewählt, daß im Verhältnis zur Wanddicke des Halteteils im Bereich der Durchgangsöffnung 13 ein entsprechender Überstand gegeben ist, der beim Anziehen der Muttern am Kraftverstärker auf das Dickenmaß der Haltevorrichtung 6 zu einer entsprechenden, die Dichtkraft erzeugenden Verformung der Dichtung führt. Durch das Einlegen der Dichtung in die Durchgangsöffnung 13 entfallen die üblicherweise erforderlichen Arbeitsgänge am Hauptzylinder 11. Der üblicherweise aufwendige Nuteinstich im Hauptzylinder zur Aufnahme der Dichtung entfällt. Hierzu soll lediglich auf die bisher notwendige Ausbildung des Flansches zur Aufnahme der Dichtung verwiesen werden.

Die Fig. 4 zeigt in vergrößerter Darstellung eine Verbindung zwischen der Haltevorrichtung 6 und der Mehrpunktaufhängung 4, wie sie bereits in Fig. 1 und 2 skizziert wurde. Die Haltevorrichtung 6 ist über die Anfasung 7 bereits in die Nut 8 des Dämpferelementes 5 eingefügt, so daß lediglich die als Bundschraube ausgeführte Mehrpunktaufhängung 4 in das zugehörige Sackloch im Hydraulikaggregat 2,3 eingeschraubt zu werden braucht. Es ist eine beliebige Einbaulage mit Radial- und Axialbelastung zulässig.

Durch die vorangegangenen Ausführungsbeispiele sind praxisgerechte Lösungen aufgezeigt, die sich durch verblüffend einfache Mittel auszeichnen, die im Hinblick auf die Reduzierung von Bauvolumen, Gewicht und Teileanzahl eine optimale, standardisierungsfähige Befestigung des Hydraulikaggregates gewährleisten.

### Bezugszeichenliste

- 1: Elektromotor
- 2: Hilfsdruckpumpe
- 3: Druckmodulator
- 4: Mehrpunktaufhängung
- 5: Dämpferelemente
- 6: Haltevorrichtung
- 7: Anfasung
- 8: Nut
- 9: Abkröpfung
- 10: Steuer- und Regelelektronik
- 11: Hauptzylinder
- 12: Kraftverstärker
- 13: Durchgangsöffnung
- 14: Nachlaufbehälter

## Patentansprüche

1. Druckregelvorrichtung einer schlupfgeregelten, hydraulischen Bremsanlage, mit einem Bremsdruckgeber, mit einem Hilfsdrucksystem, das mit dem Bremsdruckgeber zusammenwirkt, mit einem Nachlaufbehälter (14) zur Druckmittelversorgung des Bremsdruckgebers und des Hilfsdrucksystems, wobei das Hilfsdrucksystem mit wenigstens einem mehrere Hydraulikventile aufweisenden Druckmodulator (3) zumindest hydraulisch verbunden ist, sowie mit einer Steuer- und Regelelektronik zur Betätigung des Hilfsdrucksystems, wobei das Hilfsdrucksystem aus der baulichen Vereinigung eines Elektromotors (1) mit einer Hilfsdruckpumpe (2) zu einer Motor-Pumpeneinheit gebildet ist, an der der Druckmodulator (3) angebracht ist, wobei der Elektromotor (1), die Hilfsdruckpumpe (2) und der Druckmodulator (3) ein Hydraulikaggregat bilden, an dem eine Mehrpunktaufhängung (4) außerhalb eines Gehäuses des Elektromotors (1) angebracht ist, die über elastisch verformbare Dämpferelemente (5) mit ausschließlich einer Haltevorrichtung (6) verbunden ist, dadurch gekennzeichnet, daß die Mehrpunktaufhängung (4) peripher an einer einzigen Flanschfläche des Hydraulikaggregates angeordnet ist, wobei die Flanschfläche mit der Haltevorrichtung (6) verbunden ist.

2. Druckregelvorrichtung nach Anspruch 1, dadurch gekennzeichnet, daß die Haltevorrichtung (6) an der Flanschfläche des Hydraulikaggregates zum Umfang des Elektromotors (1) beabstandet ist und daß die Haltevorrichtung (6) mit der an der Flanschfläche des Hydraulikaggregates angeordneten Mehrpunktaufhängung (4) form- und/oder kraftschlüssig befestigt ist.

3. Druckregelvorrichtung nach Anspruch 1, dadurch gekennzeichnet, daß die Mehrpunktaufhängung (4) Haltebolzen aufweist, die in die Dämpferelemente (5) eingreifen.

4. Druckregelvorrichtung nach Anspruch 3, dadurch gekennzeichnet, daß an den Umfangsflächen der Dämpfungselemente (5) die Haltevorrichtung (6) angreift.

5. Druckregelvorrichtung nach Anspruch 1, dadurch gekennzeichnet, daß die Dämpferelemente (5) als elastisch verformbare Tüllen gestaltet sind, die jeweils zumindest an einer Stirnfläche mit einer Anfasung (7) und an der Mantelfläche mit einer Nut (8) versehen sind, in die die Haltevorrichtung (6) eingreift.

6. Druckregelvorrichtung nach mindestens einem der vorhergehenden Ansprüche 1-3, dadurch gekennzeichnet, daß die Mehrpunktaufhängung (4) als Dreipunktaufhängung gestaltet ist, an der die Haltevorrichtung (6) befestigt ist, die vorzugsweise mit einer Abkröpfung (9) versehen ist.

7. Druckregelvorrichtung Anspruch 1, dadurch gekennzeichnet, daß an den von der Haltevorrichtung (6) nicht verdeckten Flächen des Hydraulikaggregates (1,2,3) zumindest Teile der Steuer- und Regelvorrichtung (10) angebracht sind.

8. Druckregelvorrichtung nach Anspruch 1, dadurch gekennzeichnet, daß die Haltevorrichtung (6) ein aus Stanzen oder Tiefziehen hergestelltes Dünnblechteil ist.

9. Druckregelvorrichtung nach Anspruch 1, dadurch gekennzeichnet, daß der Bremsdruckgeber aus einem Hauptzylinder (11) und einem Kraftverstärker (12) besteht, wobei die Haltevorrichtung (6) auf der von der Mehrpunktaufhängung (4) abgewandten Seite zwischen einem aus Hauptzylinder (11) und Kraftverstärker (12) gebildeten Bremsdruckgeber eingespannt ist.

10. Druckregelvorrichtung nach Anspruch 9, dadurch gekennzeichnet, daß die Haltevorrichtung (6) zwischen den Flanschflächen von Hauptzylinder (11) und Kraftverstärker (12) eingeklemmt ist und daß die Haltevorrichtung (6) im Einklemmbereich eine Durchgangsöffnung (13) zur Aufnahme einer Dichtung aufweist, deren Dickenmaß größer ist als die Wanddicke der Haltevorrichtung (6).

## Claims

1. Pressure control device of a slip-controlled hydraulic brake system, including a brake pressure generator, an auxiliary pressure system cooperating with the brake pressure generator, a reservoir (14) for supplying the brake pressure generator and the auxiliary pressure system with pressure medium, wherein the auxiliary pressure system is connected at least hydraulically to at least one pressure modulator (3) that has several hydraulic valves, and a control electronic unit for actuating the auxiliary pressure system, wherein the auxiliary pressure system is formed by structurally combining an electric motor (1) and an auxiliary pressure pump (2) so as to attain a motor/pump unit to which the pressure modulator (3) is fitted, wherein the electric motor (1), the auxiliary pressure pump (2) and the pressure modulator (3) form a hydraulic unit on which a multipoint suspension (4) is fitted outside a housing of the electric motor (1), the multipoint suspension being exclusively connected to a holding device (6) by way of elastically deformable damping elements (5),
characterized in that the multipoint suspension (4) is peripherally arranged on one flanged surface of the hydraulic unit, and the flanged surface is connected to the holding device (6).

2. Pressure control device as claimed in claim 1,
characterized in that the holding device (6) on the flanged surface of the hydraulic unit is arranged at a distance from the circumference of the electric motor (1), and in that the holding device (6) is connected in form-locking and/or operative engagement to the multipoint suspension (4) arranged on the flanged surface of the hydraulic unit.

3. Pressure control device as claimed in claim 1,
characterized in that the multipoint suspension (4) has holding bolts that engage into the damping elements (5).

4. Pressure control device as claimed in claim 3,
characterized in that the holding device (6) engages on the circumferential surfaces of the damping elements (5).

5. Pressure control device as claimed in claim 1,
characterized in that the damping elements (5) are configured as elastically deformable sockets that are respectively provided with a chamfer (7) on at least one end surface and a groove (8) on the peripheral surface in which the holding device (6) is engaged.

6. Pressure control device as claimed in at least one of the preceding claims 1 to 3,
characterized in that the multipoint suspension (4) is realized in the form of a three-point suspension, on which the holding device (6), which is preferably provided with a right-angle bend (9), is fastened.

7. Pressure control device as claimed in claim 1,
characterized in that at least parts of the control unit (10) are fitted to the surfaces of the hydraulic unit (1, 2, 3) which are not covered by the holding device (6).

8. Pressure control device as claimed in claim 1,
characterized in that the holding device (6) is a thin sheet metal part that is manufactured by punching or deep drawing.

9. Pressure control device as claimed in claim 1,
characterized in that the brake pressure generator includes a master cylinder (11) and a power booster (12), and the holding device (6) is clamped between a brake pressure generator composed of the master cylinder (11) and the power booster (12), namely on the side facing away from the multipoint suspension (4).

10. Pressure control device as claimed in claim 9,
characterized in that the holding device (6) is clamped between the flange surfaces of the master cylinder (11) and the power booster (12), and in that the holding device (6) includes within the clamping region a through-opening (13) for accommodating a seal having a thickness which is larger than the wall thickness of the holding device (6).

## Revendications

1. Dispositif de régulation de pression d'un système de freinage hydraulique à régulation du glissement, comprenant un générateur de pression de freinage, un système de pression auxiliaire, qui coopère avec le générateur de pression de freinage, un réservoir d'équilibre (14) servant à l'alimentation en agent de pression du générateur de pression de freinage et du système de pression auxiliaire, le système de pression auxiliaire étant au moins relié hydrauliquement à au moins un modulateur de pression (3) comportant plusieurs valves hydrauliques, et un circuit électronique de commande et de régulation servant à actionner le système de pression auxiliaire, le système de pression auxiliaire étant formé de la réunion structurelle d'un moteur électrique (1) avec une pompe de pression auxiliaire (2) de façon à constituer une unité moto-pompe sur laquelle le modulateur de pression (3) est monté, tandis que le moteur électrique (1), la pompe de pression auxiliaire (2) et le modulateur de pression (3) forment un ensemble hydraulique sur lequel est montée, à l'extérieur d'un boîtier du moteur électrique (1), une suspension à points multiples (4) qui est reliée exclusivement à un dispositif de maintien (6) par l'intermédiaire d'éléments amortisseurs (5) élastiquement déformables, caractérisé en ce que la suspension à points multiples (4) est disposée en périphérie sur une surface unique de bridage de l'ensemble hydraulique, la surface de bridage étant reliée au dispositif de maintien (6).

2. Dispositif de régulation de pression suivant la revendication 1, caractérisé en ce que le dispositif de maintien (6) situé sur la surface de bridage de l'ensemble hydraulique est espacé du contour du moteur électrique (1) et en ce que le dispositif de maintien (6) est fixé par complémentarité de formes et/ou par application de force, avec la suspension à plusieurs à points multiples (4) disposée sur la surface de bridage de l'ensemble hydraulique.

3. Dispositif de régulation de pression suivant la revendication 1, caractérisé en ce que la suspension à points multiples (4) comprend des boulons de maintien qui s'engagent dans les éléments amortisseurs (5).

4. Dispositif de régulation de pression suivant la revendication 3, caractérisé en ce que le dispositif de maintien (6) prend appui sur les surfaces périphériques des éléments amortisseurs (5).

5. Dispositif de régulation de pression suivant la revendication 1, caractérisé en ce que les éléments amortisseurs (5) sont réalisés sous forme de douilles déformables qui sont pourvues chacune au moins d'une partie chanfreinée (7) sur une surface frontale et d'une gorge (8) sur la surface périphérique, le dispositif de maintien (6) s'engageant dans la gorge (8).

6. Dispositif de régulation de pression suivant au moins l'une des revendications précédentes 1 à 3, caractérisé en ce que la suspension à points multiples (4) est réalisée sous forme d'une suspension à trois points sur laquelle est fixée le dispositif de maintien (6) qui présente de préférence une partie coudée (9).

7. Dispositif de régulation de pression suivant la revendication 1, caractérisé en ce qu'au moins des parties du dispositif de commande et de régulation (10) sont montées sur les surfaces de l'ensemble hydraulique (1, 2, 3) qui ne sont pas couvertes par le dispositif de maintien (6).

8. Dispositif de régulation de pression suivant la revendication 1, caractérisé en ce que le dispositif de maintien (6) est une pièce en tôle mince réalisée par découpage ou emboutissage.

9. Dispositif de régulation de pression suivant la revendication 1, caractérisé en ce que le générateur de pression de freinage est constitué d'un maître-cylindre (11) et d'un amplificateur d'effort (12), le dispositif de maintien (6) étant serré, sur le côté opposé à la suspension à points multiples (4), entre le maître-cylindre (11) et l'amplificateur d'effort (12) qui constituent un générateur de pression de freinage.

10. Dispositif de régulation de pression suivant la revendication 9, caractérisé en ce que le dispositif de maintien (6) est serré entre les surfaces de bridage du maître-cylindre (11) et de l'amplificateur d'effort (12) et en ce que, dans la zone de serrage, le dispositif de maintien (6) comporte une ouverture de passage (13) servant à recevoir une garniture d'étanchéité dont la dimension en épaisseur est supérieure à l'épaisseur de paroi du dispositif de maintien (6).
